(19) Europäisches Patentamt / European Patent Office / Office européen des brevets

(11) **EP 3 922 617 A1**

(12) **EUROPEAN PATENT APPLICATION**
published in accordance with Art. 153(4) EPC

(43) Date of publication:
**15.12.2021 Bulletin 2021/50**

(21) Application number: **20752384.6**

(22) Date of filing: **06.02.2020**

(51) Int Cl.:
*C03C 27/06* [(2006.01)]     *E06B 3/677* [(2006.01)]

(86) International application number:
**PCT/JP2020/004593**

(87) International publication number:
**WO 2020/162551 (13.08.2020 Gazette 2020/33)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.02.2019  JP 2019022116**

(71) Applicant: **NIPPON SHEET GLASS COMPANY, LIMITED**
**Tokyo 108-6321 (JP)**

(72) Inventors:
• **NAKAZAWA, Tatsuhiro**
  **Tokyo 108-6321 (JP)**
• **KATO, Hidemi**
  **Tokyo 108-6321 (JP)**

(74) Representative: **Mewburn Ellis LLP**
**Aurora Building**
**Counterslip**
**Bristol BS1 6BX (GB)**

(54) **GLASS UNIT**

(57) A glass unit according to the present invention includes a first glass plate, a second glass plate that is arranged facing the first glass plate with a predetermined interval therebetween and forms an internal space with the first glass plate, a sealing member that seals a gap at peripheral edges of the first glass plate and the second glass plate, and a plurality of spacers arranged between the first glass plate and the second glass plate. The internal space has been depressurized to a vacuum state, the first and second glass plates each have a thickness of 5.0 mm or less, and expressions (1) and (2) below are satisfied for a cross-sectional area S (mm$^2$) of the spacers: (1) $R \leq (800/\pi) * S + 13$, and (2) $25 * 10^{-4} \pi \leq S \leq 400 * 10^{-4} \pi$, where R is the distance to a spacer closest to a certain spacer.

Fig. 2

## Description

Technical Field

The present invention relates to a glass unit.

Background Art

In recent years, glass units formed using multiple layers of glass have often been adopted for windowpanes in buildings and the like. In such glass units, an internal space is formed between two or more glass plates in order to improve the heat insulation of a room. There are various types of such glass units, and in order to further enhance the heat insulating effect, a glass unit in which the internal space is depressurized to a vacuum state has been proposed (e.g., Patent Literature 1).

Citation List

Patent Literature

Patent Literature 1: WO 2014/136152A

Summary of Invention

Technical Problem

With the aforementioned glass units, it is necessary to examine not only the heat insulating performance but also strength and sound insulation. However, such characteristics have not been sufficiently examined in conventional glass units, and further improvements are desired. The present invention has been made to solve this problem, and an object of the present invention is to provide a glass unit capable of improving not only heat insulating performance but also strength and sound insulation performance.

Solution to Problem

Item 1: A glass unit comprising:

a first glass plate;
a second glass plate that is arranged facing the first glass plate with a predetermined interval therebetween and forms an internal space with the first glass plate;
a sealing member that seals a gap at peripheral edges of the first glass plate and the second glass plate; and
a plurality of spacers arranged between the first glass plate and the second glass plate,
wherein the internal space has been depressurized to a vacuum state,
the first and second glass plates each have a thickness of 5.0 mm or less, and expressions (1) and (2) below are satisfied for a cross-sectional area S ($mm^2$) of the spacers:

$$R \leq (800/\pi) * S + 13 \qquad (1)$$

$$25 * 10^{-4}\pi \leq S \leq 400 * 10^{-4}\pi \qquad (2)$$

where R is the distance to a spacer closest to a certain spacer.

Item 2: The glass unit according to item 1, wherein the expressions (1) and (2) are satisfied for the cross-sectional area S ($mm^2$) of each of the spacers.
Item 3: The glass unit according to item 1 or 2,

wherein the spacers are arranged in a grid pattern, and
letting $P_{min}$ (mm) be a shortest pitch among pitches of the spacers, expression (3) below is also satisfied.

$$P_{min} \leq (800/\pi) * S + 13 \qquad (3)$$

Item 4: A glass unit comprising:

a first glass plate;
a second glass plate that is arranged facing the first glass plate with a predetermined interval therebetween and forms an internal space with the first glass plate;
a sealing member that seals a gap at peripheral edges of the first glass plate and the second glass plate; and
a plurality of spacers arranged between the first glass plate and the second glass plate,
wherein the internal space has been depressurized to a vacuum state,
the first and second glass plates each have a thickness of 5.0 mm or less, and
expressions (4) and (5) below are satisfied for a pitch P (mm) of the spacers and an outer diameter $\Phi$ (mm) of the spacers.

$$P \leq 100 * \Phi + 5 \qquad (4)$$

$$0.1 \leq \Phi \leq 0.4 \qquad (5)$$

Item 5: The glass unit according to any one of items 1 to 4, wherein an outer diameter $\Phi$ (mm) of the spacers is 0.2 mm or more and 0.4 mm or less.
Item 6: The glass unit according to item 5, wherein a pitch P (mm) of the spacers is 30 mm or less, and

a compressive strength of the pillars is 3000 MPa or more.

Item 7: The glass unit according to any one of items 1 to 4, wherein an outer diameter Φ (mm) of the spacers is 0.1 mm or more and 0.3 mm or less.

Item 8: The glass unit according to any one of items 1 to 4, wherein an outer diameter Φ (mm) of the spacers is 0.2 mm or more and 0.3 mm or less.

Item 9: The glass unit according to item 8, wherein a compressive strength of the pillars is 4000 MPa or more.

Item 10: The glass unit according to any one of items 1 to 4, wherein a thermal conductivity of the pillars is 3.0 W/mK or less.

Item 11: The glass unit according to any one of items 1 to 4, wherein a pitch P (mm) of the spacers is 20 mm or more.

Item 12: The glass unit according to any one of items 1 to 11, wherein the pillars are formed using a material that does not contain a carbon component.

Item 13: The glass unit according to any one of items 1 to 12, wherein a fracture toughness value $K_{IC}$ of the pillars is 1.0 MPa·m$^{1/2}$ or more.

Advantageous Effects of Invention

A glass unit according to the present invention makes it possible to further suppress the cracking of a glass plate.

Brief Description of Drawings

FIG. 1 is a plan view showing an example of a glass unit according to the present invention.
FIG. 2 is a cross-sectional view of FIG. 1.
FIG. 3 is a plan view showing an example of a cover on which an adhesive is provided.
FIG. 4 is a graph showing a relationship between the outer diameter and the pitch of spacers for preventing the glass unit from cracking.
FIG. 5A is a graph showing sound insulation performance when a spacer made of glass and having a diameter of 0.1 mm is used.
FIG. 5B is a graph showing sound insulation performance when a spacer made of glass and having a diameter of 0.2 mm is used.
FIG. 5C is a graph showing sound insulation performance when a spacer made of glass and having a diameter of 0.4 mm is used.
FIG. 6A is a graph showing the sound insulation performance when a spacer made of zirconia and having a diameter of 0.1 mm is used.
FIG. 6B is a graph showing the sound insulation performance when a spacer made of zirconia and having a diameter of 0.2 mm is used.
FIG. 6C is a graph showing the sound insulation performance when a spacer made of zirconia and having a diameter of 0.4 mm is used.
FIG. 7 is a schematic cross-sectional view showing a manufacturing process for the glass unit of FIG. 1.
FIG. 8 is a plan view of a protective plate.
FIG. 9 is a graph showing a relationship between the diameter and the compressive strength of a spacer.
FIG. 10 is a graph showing a relationship between the diameter of a spacer and the thermal transmission coefficient when the pitch is 20 mm.
FIG. 11 is a graph showing a relationship between the diameter of a spacer and the thermal transmission coefficient when the pitch is 15 mm.

Description of Embodiments

1. Overview of glass unit

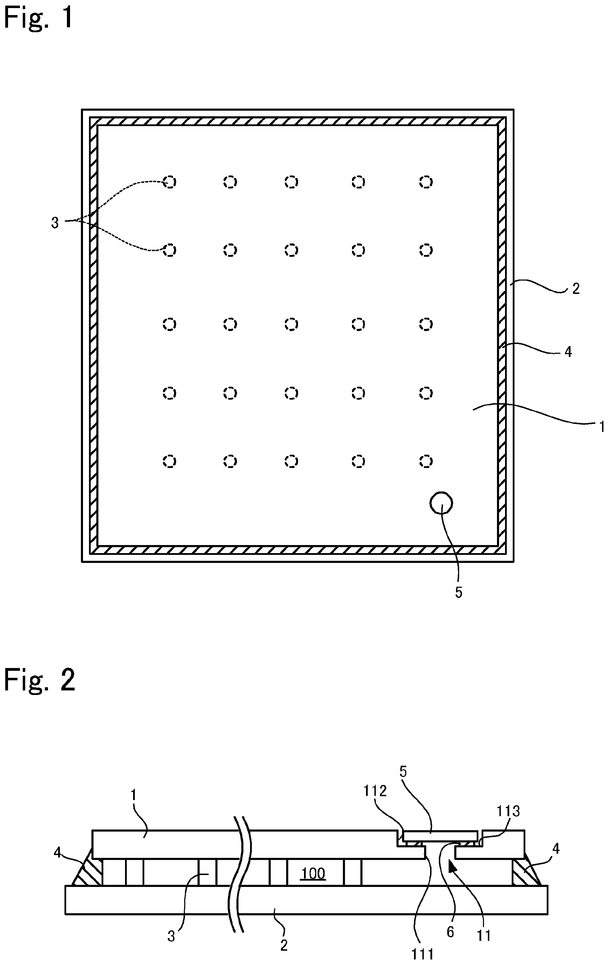

Hereinafter, an embodiment of a glass unit according to the present invention will be described with reference to the drawings. FIG. 1 is a plan view of the glass unit according to the present embodiment, and FIG. 2 is a cross-sectional view of FIG. 1. As shown in FIGS. 1 and 2, the glass unit according to the present embodiment includes two rectangular glass plates, namely a first glass plate 1 and a second glass plate 2. In the present embodiment, the second glass plate 2 shown on the lower side in FIG. 2 is formed slightly larger than the first glass plate 1. A plurality of spacers 3 are arranged between the two glass plates 1 and 2, and the spacers 3 form a gap at predetermined intervals between the two glass plates 1 and 2. Also, the gap between the peripheral edges of the two glass plates 1 and 2 is sealed by a sealing member 4, and thus an internal space 100 that is sealed and in a vacuum state is formed between the two glass plates 1 and 2. Also, a through hole 11 is formed in the first glass plate 1, and a plate-shaped cover 5 for sealing the through hole 11 is provided. The cover 5 is fixed to the first glass plate 1 via an adhesive 6. Hereinafter, the various members will be described.

2. First glass plate and second glass plate

There are no particular limitations on the material constituting the first glass plate 1 and the second glass plate 2, and a known glass plate can be used. For example, depending on the application, it is possible to use various types of glass plates constituted by template glass, frosted glass given a light diffusing function through surface treatment, wired glass, a wire-reinforced glass plate, tempered glass, double-strengthened glass, low-reflection glass, a highly transparent glass plate, a ceramic glass plate, special glass having a heat ray or ultraviolet absorbing function, or a combination of the aforementioned types. The thickness of the first glass plate 1 and the second glass plate 2 is not particularly limited, but is preferably 0.3 to 5 mm, more preferably 2 to 5 mm, and further preferably 3 to 5 mm, for example.

In particular, if the thickness is 3 mm or more, the distribution amount is high, which is advantageous in terms of cost and thus preferable.

The above-mentioned through hole 11 is formed in an end portion of the first glass plate 1. The through hole 11 has a small diameter portion 111 arranged on the internal space 100 side and a large diameter portion 112 that is continuous with the small diameter portion 111 and is open to the outside. The small diameter portion 111 and the large diameter portion 112 are formed in a coaxial cylindrical shape, and the inner diameter of the large diameter portion 112 is larger than that of the small diameter portion 211. Therefore, an annular step 113 that faces the outside is formed between the large diameter portion 112 and the small diameter portion 111.

The inner diameter of the small diameter portion 111 can be, for example, 1.0 to 3.0 mm. On the other hand, the inner diameter of the large diameter portion 112 is larger than that of the small diameter portion 111, and can be 5 to 15 mm. Setting the inner diameter to 5 mm or more makes it possible to accordingly ensure the small diameter portion 111, and therefore air can be efficiently discharged when the internal space 100 is put in a vacuum state, as will be described later. Also, as will be described later, it is possible to ensure space for the step 113 on which the adhesive 6 is placed, thereby preventing the adhesive 6 from blocking the small diameter portion 111 before melting. On the other hand, setting the inner diameter to 15 mm or less enables making the through hole 11 inconspicuous.

Also, the difference in diameter between the large diameter portion 112 and the small diameter portion 111 can be, for example, 3 to 20 mm. Setting the diameter difference to 3 mm or more makes it possible to appropriately ensure space for arranging the adhesive 6, as will be described later. Also, if the difference in diameter is too large, the appearance will be poor, and therefore it is preferable to set the upper limit to 20 mm.

Also, the depth of the large diameter portion 112, that is to say the length in the axial direction, can be set to 0.5 to 1.5 mm, for example.

The second glass plate 2 can be formed from the same material as the first glass plate 1. As described above, the second glass plate 2 is slightly larger than the first glass plate 1, the sealing member 4 mentioned above is arranged at the peripheral edge portion of the second glass plate 2 that protrudes beyond the first glass plate 1, and the gap between the peripheral edges of the two glass plates 1 and 2 is sealed by the sealing member 4.

Also, the glass plates 1 and 2 may each be a glass plate that has been strengthened by chemical strengthening, air-cooled strengthening, or the like. In particular, since the second glass plate 2 is not provided with through holes, it is possible to prevent the extent of strengthening from decreasing in the later-described step for heating the sealing member and the adhesive, and therefore strengthening may be performed. Although air-cooled strengthening is more advantageous than chemical strengthening from the viewpoint of cost, the extent of strengthening may decrease in the later-described step for heating the sealing member 4 and the adhesive 6. On the other hand, chemical strengthening can suppress a decrease in the extent of strengthening even in the heating step.

### 3. Cover and adhesive

The cover 5 is formed in a disk shape, and the outer diameter thereof is smaller than that of the large diameter portion 112 of the through hole 11 of the first glass plate 1 and larger than that of the small diameter portion 111. Therefore, the cover 5 is arranged on the step 113 between the large diameter portion 112 and the small diameter portion 111. As will be described later, air is sucked from between the cover 5 and the through hole 11 in a depressurizing step, and therefore a gap is required between the outer peripheral surface of the cover 5 and the inner peripheral surface of the large diameter portion 112. For this reason, it is preferable that the cover 5 has an outer diameter that is 0.2 to 1.5 mm smaller than the inner diameter of the large diameter portion 112.

Also, the thickness of the cover 5 is smaller than the depth of the large diameter portion 112, and the difference between the depth of the large diameter portion 112 and the thickness of the cover 5 is preferably 0.4 to 0.7 mm, for example. As will be described later, the upper surface of the cover 5 is arranged on substantially the same plane as the upper surface of the first glass plate 1, and therefore the difference between the depth of the large diameter portion 112 and the thickness of the cover 5 is equal to the thickness of adhesive 6 mentioned above. Accordingly, if this difference is smaller than 0.4 mm for example, the thickness of the adhesive 6 decreases, and therefore there is a risk of a decrease in the adhesive strength. On the other hand, if this difference is larger than 0.7 mm, the thickness of the adhesive 6 increases, but with this configuration, the heat for later-described melting of the adhesive 6 is not uniformly transferred to the adhesive 6, and there is a risk of a decrease in the adhesive strength. Also, the thickness of the cover 5 or the thickness of the first glass plate 1 decreases, which can possibly lead to cracking.

There are no particular limitations on the material constituting the cover 5 as long as it is non-breathable and has a melting point higher than the heating temperature at which the adhesive 6 and the sealing member 4 are melted, but it is preferable that the cover 5 is formed using a material that has the same coefficient of thermal expansion as the first glass plate 1, and it is particularly preferable to use the same material as the first glass plate 1. Accordingly, the difference in thermal expansion between the cover 5 and the adhesive 6 and the difference in thermal expansion between the first glass plate 1 and the adhesive 6 can be made the same, and it is possible to prevent the first glass plate 1 and the cover 5 from cracking in the later-described manufacturing process.

There are no particular limitations on the adhesive 6 as long as the cover 5 can be adhered to the first glass plate 1, but for example, an adhesive containing low melting point glass or metal solder can be used. The low melting point glass can be lead-based, tin phosphate-based, bismuth-based, or vanadium-based, for example. The low melting point glass can contain a filler or the like as an additive. Also, the low melting point glass may be either crystalline or non-crystalline. A non-crystalline low melting point glass foams in the depressurizing step as described later, but can easily fix the cover 5 due to having good fluidity. On the other hand, a crystalline low melting point glass is not likely to foam in the depressurizing step and therefore has high sealing performance, but may have low fluidity.

Also, the adhesive 6 is melted and then cooled and allowed to solidify as will be described later, and in order to prevent the first glass plate 1 from cracking due to shrinkage of the adhesive 6 during solidification, it is preferable that the difference between the coefficient of thermal expansion of the first glass plate 1 and the coefficient of thermal expansion of the adhesive 6 is $20 \times 10^{-7}$ mm/°C or less when the temperature is raised from room temperature to 300°C for example. Note that if the adhesive 6 contains glass as described above, the difference in the coefficient of thermal expansion can be particularly small due to having the same quality as the first glass plate 1 that is the adhesion target. Accordingly, when the adhesive 6 is heated and fixed for example, the difference in the coefficient of thermal expansion from that of the first glass plate 1 is small, and therefore cracking can be suppressed.

The thickness of the adhesive 6 is set to the difference between the depth of the large diameter portion 112 and the thickness of the cover 5 when the final product is obtained. As will be described later, the adhesive 6 is heated so as to melt and then cooled so as to solidify. For this reason, the thickness of the adhesive 6 before heating can larger than that after heating. Also, when the adhesive 6 is heated and melted, there are also cases where the adhesive 6 expands due to the ingress of air, for example. In such a case, the thickness of the adhesive 6 before heating can be smaller than that after heating.

Also, the adhesive 6 may be directly provided on the step 113 of the through hole 11, or a configuration is possible in which it is provided on the cover 5 in advance, and then the cover 5 is attached to the through hole 11. In this case, the adhesive 6 can be fixed to the cover 5 by temporary firing. For example, if bismuth-based low melting point glass is used as the adhesive 6, it can be temporarily fired at about 420 to 460°C. Alternatively, it can be attached to the cover 5 by printing with use of an inkjet or the like. In the case of printing, the thickness of the adhesive 6 can be 0.2 mm or less, for example.

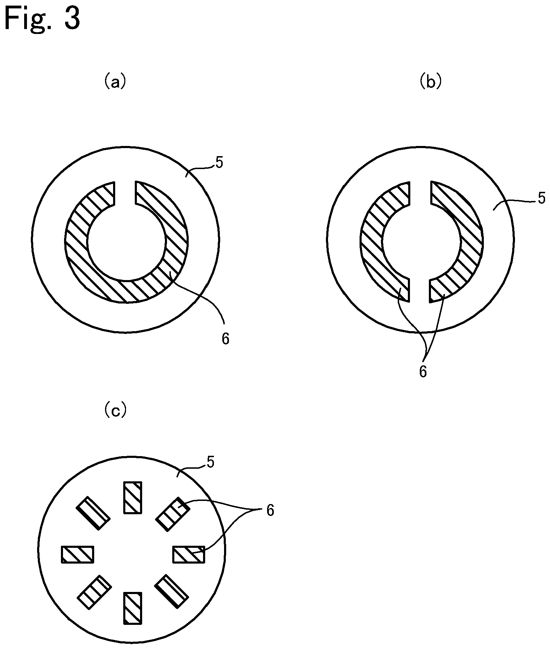

The position and shape of the adhesive 6 need only be set to allow arrangement on the step 113 of the through hole 11, but it is particularly preferable to form the adhesive 6 in an annular shape. Note that in order to ensure an air passage in the depressurizing step as will be described later, it is preferable to use a discontinuous annular shape having at least one gap, such as a C-shape ((a) in FIG. 3), a combination of arcs arranged at intervals ((b) in FIG. 3), or lines arranged radially ((c) in FIG. 3).

4. Sealing member

The sealing member 4 can be formed using the same material as that of the adhesive 6. For example, it is preferable to use non-crystalline low melting point glass as the sealing member 4 because the fluidity is high and the sealing member 4 can easily flow in the gap between the two glass plates 1 and 2. In this case, in order to improve the sealing performance, it is preferable that the sealing member 4 extends 2 to 7 mm inward from the end surface of the first glass plate 1, for example. The upper limit is 7 mm.

As described above, low melting point glass or metal solder can be used as the sealing member 4, but if the manufacturing process described later is adopted, the melting point of the adhesive 6 needs to be higher than the melting point of the sealing member 4. For example, if both the adhesive 6 and the sealing member 4 are the same type of low melting point glass, the amount of low melting point glass and the amount of the additive filler of the adhesive 6 can be adjusted in order to set the melting point higher than the melting point of the sealing member 4.

From this point of view, is low melting point glass is used as the sealing member 4 for example, metal solder having a lower melting point than the low melting point glass cannot be used as the adhesive 6. On the other hand, although metal solder can be used as both the sealing member 4 and the adhesive 6, it is necessary to adjust the adhesive 6 so that the melting point is higher as described above.

5. Spacer

Because the internal space 100 of the glass unit is in a vacuum state, the two glass plates 1 and 2 that sandwich the internal space 100 are suctioned toward each other and may flex toward the internal space. The glass plates 1 and 2 may crack due to this flexing. For example, cracking may occur particularly when the glass plates 1 and 2 come into contact with each other. In order to prevent this, spacers 3 are arranged between the two glass plates 1 and 2, and the distance between the two glass plates 1 and 2 is kept constant.

The spacers 3 are each shaped as a circular column, but alternatively can be shaped as a polygonal column. However, a circular cross section is preferable due to making it possible to be processed with a lathe.

This is because machining with a lathe is highly accurate. The spacer 3 can be formed from various materials, examples of which include a ceramic such as cordierite, mullite, or zirconia, a resin such as PTFE (polytetrafluoroethylene), PEEK (polyether ether ketone), or PI (polyimide), and glass, but there is no particular limitation to these examples. However, it is preferable to use a material that does not contain a carbon component. This is because if the spacer 3 contains a carbon component, a gas may be released from the spacer 3 into the internal space 100 over time, which may make it impossible to maintain the vacuum state. Also, due to the release of the gas, the thermal transmission coefficient of the glass unit may increase, and the heat insulating performance may decrease.

Also, it is preferable that the spacer 3 is formed from a material that has a high Young's modulus. This is because given that the spacer needs to play the role of supporting the glass plates 1 and 2, the less the spacer 3 shrinks due to stress when supporting the glass plates 1 and 2, the more firmly the glass plates 1 and 2 can be supported. In view of this, the spacer 3 is preferably formed from a ceramic such as cordierite, mullite, or zirconia.

As described above, the spacers 3 need to have a certain degree of strength due to being sandwiched between the two glass plates 1 and 2. In view of this, although the compressive strength of the spacers 3 depends on a pitch P of the spacers 3, the compressive strength is preferably 200 MPa or more, more preferably 400 MPa or more, still more preferably 3000 MPa or more, and particularly preferably 4000 MPa or more.

Also, if the spacers 3 are made of zirconia, which is a brittle material, for example, it is preferable that the spacers 3 have a fracture toughness value $K_{IC}$ of 1.0 MPa·m$^{1/2}$ or more. The fracture toughness value is measured according to JIS R1607 in the case of ceramics and glass, according to JIS G0564 in the case of metals, and according to ISO 13586 in the case of resins.

As described above, the spacers 3 according to the present embodiment are formed using a ceramic, a resin, or a glass material, and this is because such materials have a low thermal conductivity. On the other hand, if the spacers 3 are formed using a material that has a high thermal conductivity, such as a metal, heat may be conducted through the spacers 3, which may impair the heat insulating property of the glass unit. In view of this, the thermal conductivity of the spacers 3 is preferably 15 W/mK or less, more preferably 10 W/mK or less, further preferably 5.0 W/mK or less, and particularly preferably 3.0 W/mK or less. Note that the thermal conductivity of ceramics is approximately 2.0 to 5.0 W/mK, the thermal conductivity of resins is approximately 1.0 W/mK or less, and the thermal conductivity of glass materials is approximately 0.5 to 1.5 W/mK.

Also, in order to improve the heat insulating property of the glass unit, the thermal transmission coefficient U of the glass unit is preferably 1.2 W/(m²/K) or less, and more preferably 1.0 W/(m²/K) or less.

Note that the thermal transmission coefficient U is the reciprocal of the thermal transmission resistance R, and the thermal transmission resistance R is expressed by the following expression (A).
[Expression 1]

$$R = \frac{1}{h_e} + \frac{1}{h_g} + \frac{1}{h_i} \qquad (A)$$

he: outdoor thermal transmission rate
hg: glass body thermal transmission rate
hi: indoor thermal transmission rate

There are no particular limitations on the method of arranging the spacers 3, but it is preferable that the spacers 3 are arranged in a grid pattern. Note that in the following, unless otherwise specified, it is assumed that the spacers 3 are arranged in a grid pattern and shaped as circular columns.

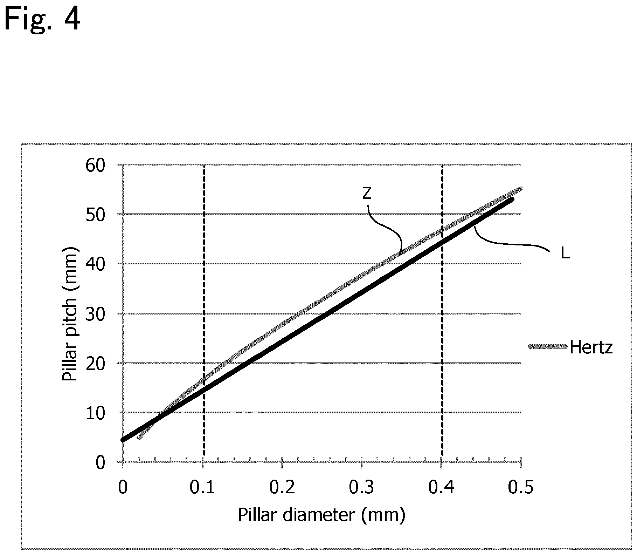

Because the internal space 100 of the glass unit is in a vacuum state, the two glass plates 1 and 2 that sandwich the internal space 100 are suctioned toward each other may flex toward the internal space. The glass plates 1 and 2 may crack due to this flexing. In order to prevent this, the spacers 3 are arranged between the two glass plates 1 and 2. According to an examination carried out by the inventors regarding this point, it was found that the relationship between the outer diameter Φ of the spacers 3 and the pitch P of the spacers 3 arranged in a grid pattern needs to be in a range lower than a line Z shown in FIG. 4. In other words, it was found that cracking of the glass unit occurs in the range above the line Z. Accordingly, it was found that the outer diameter Φ (mm) of the spacers and the pitch P (mm) of the spacers 3 need to satisfy the following expression (B) shown by a line L in FIG. 4.

$$P \leq 100 * \Phi + 5 \qquad (B)$$

Note that in the glass unit used in the examination shown in FIG. 4, the thickness of each of the glass plates 1 and 2 was 3.0 mm, and the thickness of the internal space 100 was 0.2 mm. Accordingly, if the thickness of each of the glass plates 1 and 2 is 5 mm for example, it is possible to prevent damage to the glass plates 1 and 2 as long as the expression (B) is satisfied.

Also, in the present embodiment, the outer diameter Φ of the spacers 3 satisfies the following expression (C), and more preferably the expression (D).

$$0.1 \leq \Phi \leq 0.4 \qquad (C)$$

$$0.2 \leq \Phi \leq 0.3 \qquad (D)$$

This is because, as will be described later, if the diameter of the spacers 3 is too large, the area of contact with the glass plates 1 and 2 is large, and the heat insulating performance of the glass unit deteriorates. On the other hand, if the diameter of the spacers 3 is too small, the sound insulation performance of the glass unit deteriorates.

Also, according to the expression (B), the expression (C) or the expression (D), the pitch of the spacers 3 is preferably 15 mm or more and 45 mm or less, and more preferably 25 mm or more and 35 mm or less. This is preferable in view of the following. If the pitch of the spacers 3 is too large, the glass plates may flex and come into contact with each other, and cracks may form in the glass plates 1 and 2. If the cracking of the glass plates can be prevented, the strength of the glass plates 1 and 2 can be lowered, and thus the glass plates 1 and 2 can be made thinner. On the other hand, if the spacer pitch is large, the number of spacers that need to be arranged decreases, and thus the cost can be reduced and the appearance is improved.

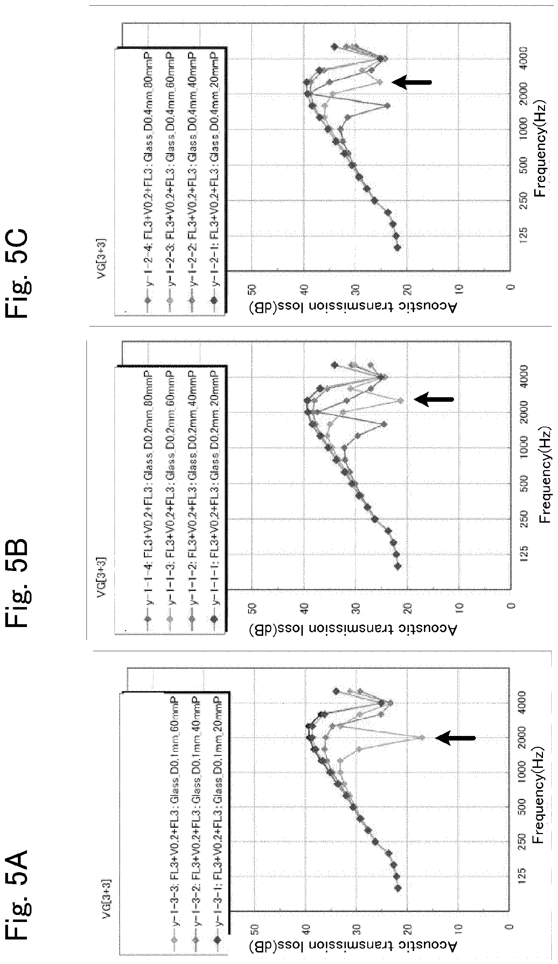

Also, according to an examination carried out by the inventors, it was found that increasing the pitch P of the spacers 3 lowers the sound insulation performance. FIGS. 5A to 5C show the sound insulation performance when spacers made of glass and having a height of 0.2 mm are arranged in a grid pattern between float glass plates having a thickness of 3 mm. The pitches of the spacers were 20 mm, 40 mm, 60 mm, and 80 mm (the 80 mm pitch has been omitted only in FIG. 5A). Also, in FIGS. 5A to 5C, the diameters of the spacers were 0.1 mm, 0.2 mm, and 0.4 mm, respectively.

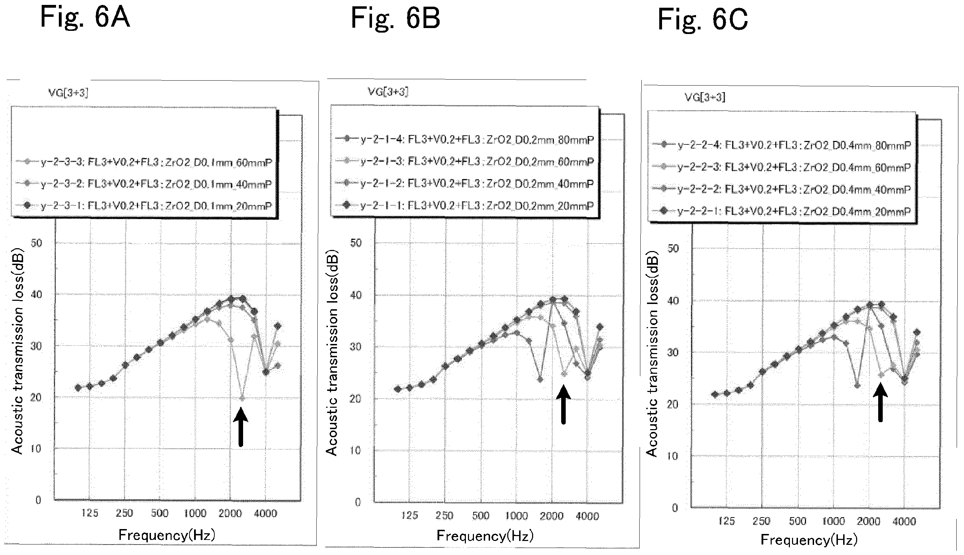

Similarly, FIGS. 6A to 6C show the sound insulation performance when spacers made of zirconia and having a height of 0.2 mm are arranged in a grid pattern between float glass plates having a thickness of 3 mm. The pitches of the spacers were 20 mm, 40 mm, 60 mm, and 80 mm (the 80 mm pitch has been omitted only in FIG. 6A). Also, in FIGS. 6A to 6C, the diameters of the spacers were 0.1 mm, 0.2 mm, and 0.4 mm, respectively.

The arrows in FIGS. 5A to 5C show the sound insulation performance when the pitch is 60 mm, and it can be seen that the larger the diameter of the spacers 3 is, the higher the sound insulation performance is. As shown by the arrows in FIGS. 6A to 6C, this trend is the same even if the material is changed. Also, the smaller the pitch is, the higher the sound insulation performance is. Accordingly, the diameter of the spacers 3 is preferably 0.1 mm or more as described above, and the pitch of the spacers 3 is preferably 45 mm or less as described above.

The height of the spacers 3 can be 0.1 to 2.0 mm, and more preferably 0.1 to 0.5 mm, for example. The height of the spacers 3 is the distance between the glass plates 1 and 2, that is to say, the thickness of the internal space 100.

6. Glass unit manufacturing method

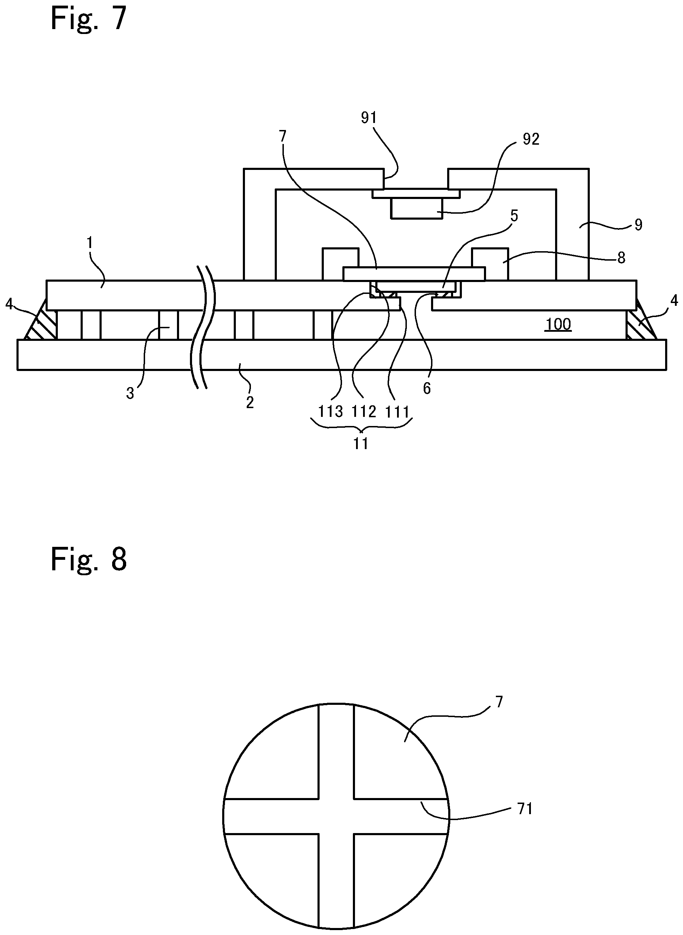

Next, a method for manufacturing the glass unit will be described. First, the structure shown in FIG. 7 is assembled. Specifically, the first glass plate 1 provided with the through hole 11 as described above and the second glass plate 2 are prepared. Next, the spacers 3 are arranged on the second glass plate 2, and then the first glass plate 1 is arranged on the spacers 3. Note that the spacers 3 may simply be arranged on the second glass plate 2 as described above, or can be fixed on the second glass plate 2 using an adhesive.

A sealing material 40 is then arranged on the peripheral edge of the second glass plate 2 so as to close the gap between the peripheral edges of the two glass plates 1 and 2. This corresponds to the sealing member 4 before it melts and solidifies.

Also, as described above, the C-shaped adhesive 6 is attached to one surface of the cover 5 by temporary firing or the like. Then, the cover 5 is attached to the through hole 11 of the first glass plate 1. At this time, the adhesive 6 is arranged on the step 113 of the through hole 11. Subsequently, the disc-shaped protective plate 7, which is larger than the large diameter portion 112 of the through hole 11, is arranged on the cover 5, and a weight 8 is further arranged on the protective plate 7. As a result, the cover 5 is pressed against the step 113 by the weight 8 via the protective plate 7.

At this time, since the adhesive 6 has been temporarily fired and solidified, it is not squashed, and the adhesive 6 forms a gap between the cover 5 and the step 113. Also, as shown in FIG. 8, a cross-shaped groove 71 is formed in the lower surface of the protective plate 7. For this reason, air flows between the internal space 100 of the glass unit and the outside through the small diameter portion 111 of the through hole 11, the discontinuous portion of the adhesive 6, the gap between the large diameter portion 112 and the cover 5, and the groove 71 of the protective plate 7.

As will be described later, due to needing to conduct heat, the protective plate 7 is preferably made of a material that has a low infrared ray absorption rate and a low coefficient of expansion when heated. For example, quartz glass or the same material as the cover 5 and the glass plates 1 and 2 can be used. Note that the protective plate 7 need only be made of a material that does not prevent the adhesive 6 from being heated by radiant heat from a later-described heater 92, and may be transparent or opaque.

The weight 8 can be shaped to press the peripheral edges of the protective plate 7 without blocking the cover 5, and may be formed in a donut shape, for example. Note that the weight 8 needs to have a shape that ensures the above-mentioned air flow path. In other words, it is necessary to have a structure in which the groove 71 of the protective plate 7 is open to the outside.

After arranging the protective plate 7 and the weight 8 in this way, a cup-shaped closing member 9 is attached to the upper surface of the first glass plate 1 so as to cover the protective plate 7 and the weight 8. Accordingly, the space surrounded by the closing member 9, including the through hole 11, is sealed. Also, an opening 91 is formed in the upper portion of the closing member 9, and the opening 91 is connected to a vacuum pump (not shown) to depressurize the internal space 100. Also, inside the closing member 9, a heater 92 made of tungsten or the like is provided above the protective plate 7, and the adhesive 6 is heated by the heater 92.

After the closing member 9 is attached in this way, the assembly is placed in a heating furnace (not shown) and heated. First, the sealing material 40 is heated to the melting point or above to melt the sealing material 40. The melted sealing material 40 enters the gap between the peripheral edges of the two glass plates 1 and 2. For example, if bismuth-based low melting point glass is used as the sealing material 40, it is heated to around 470°C. Thereafter, the temperature of the heating furnace is lowered to, for example, about 380 to 460°C, and the sealing material 40 is allowed to solidify. Since the heating temperature at this time is lower than the melting point of the adhesive 6, the adhesive 6 does not melt. Therefore, the above-mentioned air flow path is ensured. Note that there are no particular limitations on the means for heating the sealing material 40, and radiant heating, laser heating, induction heating, or the like can be adopted. In particular, if the sealing material 40 is made of a metal, induction heating can be adopted.

Subsequently, the vacuum pump is driven to reduce the pressure. In other words, the internal space 100 is depressurized through the above-mentioned air flow path. If the pressure in the internal space 100 is 1.33 Pa or less for example, the heat shielding performance can be guaranteed, and thus such a state can be regarded as a vacuum state.

In this depressurizing step, force acts in the direction of bringing the glass plates 1 and 2 closer to each other, and the sealing material 40 is also squashed at the same time. Accordingly, voids inside the sealing material 40 can be eliminated, and therefore the leakage of gas through the sealing member 4 can be prevented. Accordingly, depressurization is preferably started at a temperature before the sealing material 40 has completely solidified, and the temperature for solidification of the sealing material described above (380 to 460°C in the above example) can be determined in consideration of this. For example, depressurization can be performed when the temperature becomes 50 to 150°C lower than the melting point of the sealing material 40. Note that if metal solder is used as the sealing material 40 for example, the sealing material 40 can be allowed to solidify regardless of the above-mentioned range of 380 to 460°C.

Following this, the heater 72 is driven to heat the adhesive 6. If the adhesive 6 is formed of bismuth-based low melting point glass for example, the temperature of the adhesive 6 is raised to about 500°C by the heater 72. Accordingly, the adhesive 6 melts, and the pressure applied by the weight 8 also helps to squash the adhesive 6. As a result, the C-shaped adhesive 6 deforms in an annular shape, and the cover 5 and the adhesive 6 airtightly seal the small diameter portion 111 of the through hole 11. In this way, the vacuum state of the internal space 100 is maintained. Thereafter, when the driving of the heater 72 is stopped and the whole assembly is slowly cooled, the sealing material 40 completely solidifies and forms the sealing member 4 that seals the gap between the peripheral edges of both glass plates 1 and 2. The above steps obtain the glass unit. Note that a device other than the heater 72 described above may be used as long as the adhesive 6 can be heated.

7. Characteristics

As described above, it was found by the inventors that the glass unit can be prevented from cracking if the expression (B) is satisfied. It was also found that the sound insulation performance and the heat insulating performance of the glass unit can be improved if the expression (C) or the expression (D) is satisfied.

8. Variations

Although an embodiment of the present invention has been described above, the present invention is not limited to the above embodiment, and various modifications can be made without departing from the spirit of the present invention. Note that the following variations can be combined as appropriate.

8-1

In the above embodiment, the glass unit is prevented from cracking by specifying the outer diameter Φ and the pitch P of the spacers 3, but in the case where the spacers 3 have a shape other than a circular column and an arrangement other than a grid pattern for example, the cross-sectional area S ($mm^2$) of the spacers 3 can be used instead. In this case, the following expressions (E) and (F) can be used instead of the above expressions (B) and (D). These expressions (E) and (F) are based on the graph of FIG. 4. Note that R is the distance to the spacer closest to a certain spacer 3. However, it is preferable that the following expressions E (E) and (F) are satisfied for all spacers.

$$R \leq (800/\pi) * S + 13 \quad (E)$$

$$25 * 10^{-4}\pi \leq S \leq 400 * 10^{-4}\pi \quad (F)$$

Also, the pitch P of the spacers is 0.15 mm or more and 0.45 mm as shown in the above embodiment, and need only satisfy the above expressions (E) and (F). Accordingly, similarly to the above embodiment, it is possible to prevent the glass unit from cracking, and furthermore improve the sound insulation performance and the heat insulating performance of the glass unit.

8-2

Although the spacers 3 are arranged in a grid pattern in the above embodiment, if the pitch is not uniform, the following expression (G) can be used instead of the expression (E). Here, $P_{min}$ (mm) is the shortest pitch among the pitches of the spacers.

$$P_{min} \leq (800/\pi) * S + 13 \quad (G)$$

8-3

In the above embodiment, the through hole 11 is formed in the first glass plate 1, the internal space 100 is put in a vacuum state, and then the cover 5 is fixed, but as long as the internal space 100 can be put in a vacuum state, there are no particular limitations on the method for forming the through hole 11. For example, a configuration is possible in which a resin or glass pipe is fixed to the through hole 11 with an adhesive, air is sucked through the pipe, and then the pipe is melted to close the through hole 11. Also, the cover 5 and the pipe may protrude from the surface of the first glass plate 1 to some extent.

8-4

In the above embodiment, the second glass plate 2 is formed larger than the first glass plate 1, but it may have the same shape. In this case, the sealing member 4 is introduced into the gap between the peripheral edges of both glass plates 1 and 2.

8-5

After the glass unit has been manufactured as described above, by arranging an interlayer film and a third glass plate on the first glass plate 1 in this order and then fixing them using a known autoclave, it is possible to form laminated glass constituted by the first glass plate 1, the interlayer film, and the third glass plate. The interlayer film can be constituted by a known resin film used for laminated glass, and the third glass plate can be constituted by a glass plate similar to the first glass plate 1.
As described above, if the cover 5 is substantially flush with the surface of the first glass plate 1, the interlayer film and the third glass plate can be stacked without the cover 5 getting in the way. Accordingly, besides using the first glass plate 1 that has been strengthened as described above, by forming laminated glass, the glass unit according to the present invention can be made into safety glass.

8-6

A known Low-E film can also be stacked on at least one of the first glass plate 1 and the second glass plate 2.

8-7

The glass unit of the present invention can be used not only as a window glass for a building where heat insulation performance and heat shielding performance is required, but also as a cover glass that is to be mounted on the outer surface of a device (e.g., a device such as a refrigerator). Also, either the first glass plate 1 or the second glass plate 2 may be arranged so as to face the outside of the device, the building, or the like to which the glass unit is to be mounted, but because the first glass plate 1 provided with the through hole 11 has a lower strength than the second glass plate 2, it is preferable to arrange the second glass plate 2 so as to face the outside.

Working Examples

Hereinafter, working examples of the present invention will be described. However, the present invention is not limited to the following working examples.

1. Examination of compression of spacers

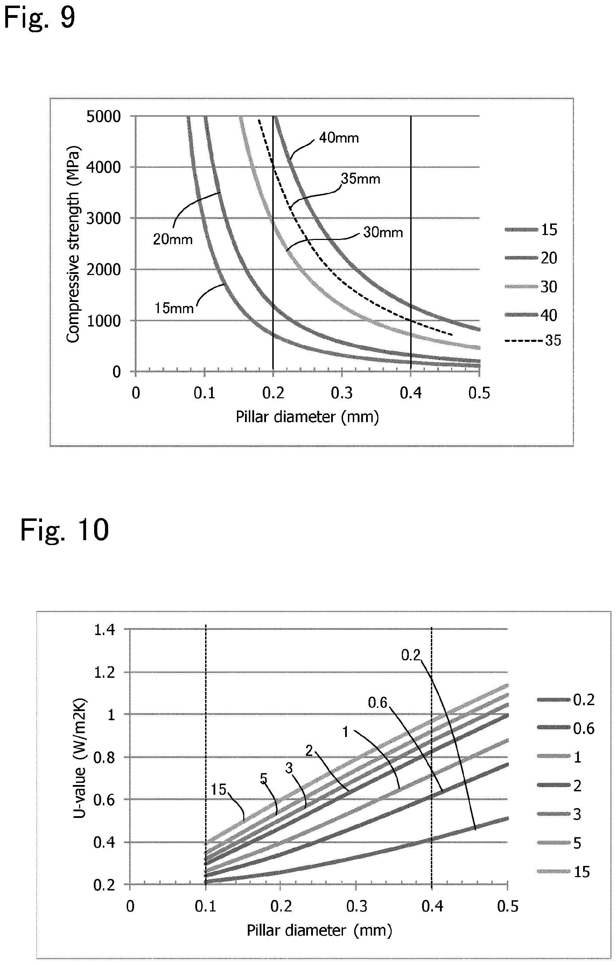

Hereinafter, the compression of the spacers by the two glass plates will be examined. When float glass pates with a thickness of 3 mm are used as the first and second glass plates and the thickness of the internal space is 0.2 mm, the relationship between the outer diameter of the spacers and the compressive strength required for the spacers was examined for each of various pitches by simulation. The results are shown in FIG. 9.
According to FIG. 9, the smaller the outer diameter of the spacer is, the higher the required compressive strength is. Also, the larger the spacer pitch is, the higher the required compressive strength is. Accordingly, it can be understood from FIG. 9 that when the outer diameter of the spacer is 0.2 mm and the pitch is 30 mm for example, the required compressive strength is 3000 MPa, and thus when the spacer pitch P is 30 mm or less and the outer diameter $\varphi$ is from 0.2 to 0.4 mm, if the compressive strength of the spacer is 3000 MPa or more, the spacer can withstand compression by the two glass plates. Similarly, it can be understood that when the outer diameter of the spacer is 0.2 mm and the pitch is 35 mm for example, the required compressive strength is 4000 MPa, and therefore when the spacer pitch P is 35 mm or less and the outer diameter $\varphi$ is 0.2 to 0.4 mm, if the compressive strength of the spacer is 4000 MPa or more, the spacer can withstand compression by the two glass plates.

2. Examination of relationship between spacers and heat insulating performance

As shown in the above embodiment, if the thermal conductivity of the spacers is high, heat may be conducted the spacers and leak out, and this may increase the thermal transmission coefficient of the glass unit. In view of this, the relationship between the thermal conductivity of the spacers and the thermal transmission coefficient was examined by simulation.

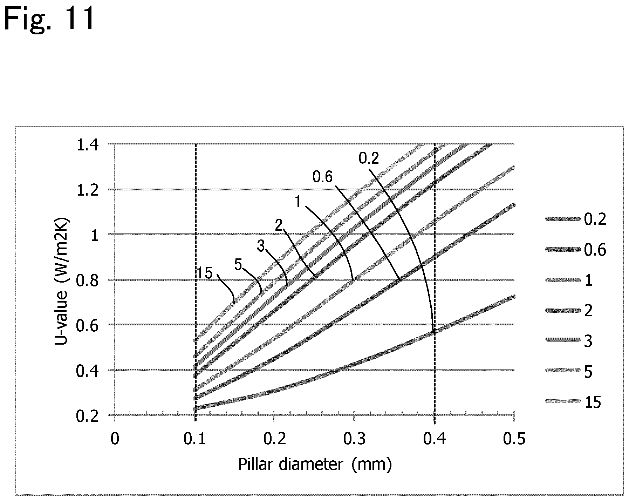

First, soda lime glass plates with a thickness of 3 mm were used as the first and second glass plates, and the thickness of the internal space was 0.2 mm. Also, the relationship between the outer diameter $\varphi$ of the spacers and the thermal transmission coefficient U with a spacer pitch P of 20 mm was calculated by simulation using spacers having different thermal conductivities (0.2, 0.6, 1, 2, 3, 5, 15 W/mK) . Simulation was similarly performed with a spacer pitch P of 15 mm. When calculating the thermal transmission coefficient U, the temperature difference between indoors and outdoors was set to 50°C, and the humidity inside and outside was set to 50%. The results are shown in FIG. 10 (spacer pitch: 20 mm) and FIG. 11 (spacer pitch: 15 mm).

As shown in FIG. 10, in the case where the spacer pitch P is 20 mm, when the outer diameter $\varphi$ of the spacer is in the range of 0.1 to 0.4 mm, if the thermal conductivity of the spacer is 15 W/mK or less, the thermal transmission coefficient U is 1.2 W/(m$^2$/K) or less. In other words, high heat insulating performance was achieved. In particular, it was found that the smaller the outer diameter $\Phi$ of the spacers is, the lower the thermal transmission coefficient U is. On the other hand, as shown in FIG. 11, it was found that in the case where the spacer pitch P is 15 mm, when the outer diameter $\varphi$ of the spacers is 0.1 to 0.4 mm, in order for the thermal transmission coefficient U to be 1.3 W/(m$^2$/K) or less, the thermal conductivity of the spacers needs to be 3 W/mK or less. Accordingly, it was found that when the thermal conductivity of the spacers is 3 W/mK or less, even if the spacer pitch is 15 mm or more and the outer diameter of the spacer is in the range of 0.1 to 0.4 mm, the thermal transmission coefficient U can be 1.3 W/ (m$^2$/K) or less.

List of Reference Numerals

1    First glass plate
2    Second glass plate
3    Spacer
4    Sealing member

## Claims

1. A glass unit comprising:

   a first glass plate;
   a second glass plate that is arranged facing the first glass plate with a predetermined interval therebetween and forms an internal space with the first glass plate;
   a sealing member that seals a gap at peripheral edges of the first glass plate and the second glass plate; and
   a plurality of spacers arranged between the first glass plate and the second glass plate,
   wherein the internal space has been depressurized to a vacuum state,
   the first and second glass plates each have a thickness of 5.0 mm or less, and
   expressions (1) and (2) below are satisfied for a cross-sectional area S (mm$^2$) of the spacers:

   $$R\leq(800/\pi)*S+13 \qquad (1)$$

   $$25*10^{-4}\pi\leq S\leq400*10^{-4}\pi \quad (2)$$

   where R is the distance to a spacer closest to a certain spacer.

2. The glass unit according to claim 1, wherein the expressions (1) and (2) are satisfied for the cross-sectional area S (mm$^2$) of each of the spacers.

3. The glass unit according to claim 1 or 2,

   wherein the spacers are arranged in a grid pattern, and
   letting $P_{min}$ (mm) be a shortest pitch among pitches of the spacers, expression (3) below is also satisfied.

   $$P_{min}\leq(800/\pi)*S+13 \qquad (3)$$

4. A glass unit comprising:

   a first glass plate;
   a second glass plate that is arranged facing the first glass plate with a predetermined interval therebetween and forms an internal space with the first glass plate;
   a sealing member that seals a gap at peripheral edges of the first glass plate and the second glass plate; and
   a plurality of spacers arranged between the first glass plate and the second glass plate,

wherein the internal space has been depressurized to a vacuum state,
the first and second glass plates each have a thickness of 5.0 mm or less, and
expressions (4) and (5) below are satisfied for a pitch P (mm) of the spacers and an outer diameter Φ (mm) of the spacers.

$$P \leq 100 * \Phi + 5 \quad (4)$$

$$0.1 \leq \Phi \leq 0.4 \quad (5)$$

5. The glass unit according to any one of claims 1 to 4, wherein an outer diameter Φ (mm) of the spacers is 0.2 mm or more and 0.4 mm or less.

6. The glass unit according to claim 5,

   wherein a pitch P (mm) of the spacers is 30 mm or less, and
   a compressive strength of the pillars is 3000 MPa or more.

7. The glass unit according to any one of claims 1 to 4, wherein an outer diameter Φ (mm) of the spacers is 0.1 mm or more and 0.3 mm or less.

8. The glass unit according to any one of claims 1 to 4, wherein an outer diameter Φ (mm) of the spacers is 0.2 mm or more and 0.3 mm or less.

9. The glass unit according to claim 8, wherein a compressive strength of the pillars is 4000 MPa or more.

10. The glass unit according to any one of claims 1 to 4, wherein a thermal conductivity of the pillars is 3.0 W/mK or less.

11. The glass unit according to any one of claims 1 to 4, wherein a pitch P (mm) of the spacers is 20 mm or more.

12. The glass unit according to any one of claims 1 to 11, wherein the pillars are formed using a material that does not contain a carbon component.

13. The glass unit according to any one of claims 1 to 12, wherein a fracture toughness value $K_{IC}$ of the pillars is 1.0 MPa $\cdot m^{1/2}$ or more.

## Fig. 1

## Fig. 2

# Fig. 3

(a)

(b)

(c)

Fig. 4

Fig. 5A

Fig. 5B

Fig. 5C

Fig. 6A  Fig. 6B  Fig. 6C

## Fig. 7

## Fig. 8

## Fig. 9

## Fig. 10

Fig. 11

## INTERNATIONAL SEARCH REPORT

| International application No. |
|---|
| PCT/JP2020/004593 |

### A. CLASSIFICATION OF SUBJECT MATTER
Int. Cl. G03C27/06(2006.01)i, E06B3/677(2006.01)i
FI: C03C27/06 101D, E06B3/677, G03C27/06 101J

According to International Patent Classification (IPC) or to both national classification and IPC

### B. FIELDS SEARCHED

Minimum documentation searched (classification system followed by classification symbols)
Int. Cl. C03C27/06, E06B3/677

Documentation searched other than minimum documentation to the extent that such documents are included in the fields searched
Published examined utility model applications of Japan      1922-1996
Published unexamined utility model applications of Japan    1971-2020
Registered utility model specifications of Japan            1996-2020
Published registered utility model applications of Japan    1994-2020

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2013/132869 A1 (PANASONIC CORP.) 12 September 2013, paragraphs [0006], [0025]-[0027], [0063]- | 1-5, 7-8, 11-12 |
| Y | [0069], fig. 1, 4, paragraphs [0006], [0025]-[0027], [0063]-[0069], fig. 1, 4 | 6, 9-10, 13 |
| X | WO 2003/000613 A1 (NIPPON SHEET GLASS CO., LTD.) 03 January 2003, page 6, line 26 to page 8, line 9, fig. 1, page 6, line 26 to page 8, line 9, fig. 1 | 1-9, 11-12 |
| Y | | 10, 13 |
| Y | WO 2012/157520 A1 (ASAHI GLASS CO., LTD.) 22 November 2012, paragraph [0051] | 6, 9 |
| Y | JP 2001-180985 A (NIPPON SHEET GLASS CO., LTD.) 03 July 2001, paragraph [0028] | 6, 9 |

☒ Further documents are listed in the continuation of Box C.  ☒ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 10.03.2020 | 24.03.2020 |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

| International application No. |
| --- |
| PCT/JP2020/004593 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | WO 2018/159305 A1 (PANASONIC INTELLECTUAL PROPERTY MANAGEMENT CO., LTD.) 07 September 2018, paragraph [0017] | 10 |
| Y | JP 11-513015 A (SAINTGOBAIN VITRAGE) 09 November 1999, page 10, lines 18-21 | 13 |

Form PCT/ISA/210 (continuation of second sheet) (January 2015)

**INTERNATIONAL SEARCH REPORT**
Information on patent family members

| Patent Documents referred to in the Report | Publication Date | Patent Family | Publication Date |
|---|---|---|---|
| WO 2013/132869 A1 | 12.09.2013 | US 2014/0335291 A1 paragraphs [0035]-[0039], [0058]-[0063] CN 104066697 A | |
| WO 2003/000613 A1 | 03.01.2003 | US 2004/0028846 A1 paragraphs [0036]-[0046], fig. 1 EP 1403225 A1 CA 2431643 A1 | |
| WO 2012/157520 A1 | 22.11.2012 | (Family: none) | |
| JP 2001-180985 A | 03.07.2001 | US 2002/0121111 A1 paragraph [0072] EP 1160217 A1 | |
| WO 2018/159305 A1 | 07.09.2018 | (Family: none) | |
| JP 11-513015 A | 09.11.1999 | US 6261652 B1 page 7, left column, lines 39-55 FR 2752012 A1 | |

| International application No. |
|---|
| PCT/JP2020/004593 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014136152 A